# EUROPEAN PATENT SPECIFICATION

(11) **EP 3 495 323 B1**
(45) Date of publication and mention of the grant of the patent: **09.09.2020**
(21) Application number: 17205902.4
(22) Date of filing: 07.12.2017
(51) Int. Cl.: C01F 11/38, C01B 25/26, C05B 11/06

(54) **A PROCESS FOR OBTAINING A SOLUBLE PHOSPHATE FRACTION FROM PHOSPHATE CONTAINING ASH**
VERFAHREN ZUR HERSTELLUNG EINER LÖSLICHEN PHOSPHATFRAKTION AUS PHOSPHATHALTIGER ASCHE
PROCÉDÉ D'OBTENTION D'UNE FRACTION DE PHOSPHATE SOLUBLE À PARTIR DE CENDRES CONTENANT DU PHOSPHATE

(43) Date of publication of application: 12.06.2019
(73) Proprietor: Borealis Agrolinz Melamine GmbH, 4021 Linz (AT)
(72) Inventor: GABRIEL, Herbert, 4076 Marienkirchen (AT); DICKE, René, 4060 Leonding (AT); MACHL, Doris, 4931 Mettmach (AT)
(74) Representative: Maikowski & Ninnemann Patentanwälte Partnerschaft mbB

(56) References cited:
- EP-A1- 0 122 646
- WO-A1-2011/137880
- US-A- 1 856 187
- US-A- 4 008 309
- US-A1- 2016 257 574
- HANNES HERZEL ET AL: "Sewage sludge ash - A promising secondary phosphorus source for fertilizer production", SCIENCE OF THE TOTAL ENVIRONMENT, vol. 542, 29 August 2015 (2015-08-29), pages 1136-1143, XP55436654, AMSTERDAM, NL ISSN: 0048-9697, DOI: 10.1016/j.scitotenv.2015.08.059

## Description

The present invention relates to a process for obtaining a soluble phosphate fraction from phosphate containing ash.

### Description

Phosphorus is an essential nutrient for all plants and animals without any possibility of substitution. The demand for phosphorus is growing, and remaining phosphate rock could become increasingly scarce, expensive and the quality will probably decrease.

Phosphorus is a non-substitutable raw material whose availability has been identified as a globally relevant bottleneck for fertilizer and food supply and is therefore declared a critical raw material by the European commission.

Until 2050 the demand for fertilizer will grow tremendously due to the increase of the world population up to approx. 10 Billions on one hand and the increasing meat consumption all over the world on the other hand. Furthermore, the household waste due to poor food storage and handling and the missing options for recovery lead to the high overall Phosphate-loss number.

Manufacturing processes for phosphorus containing fertilizers often involve the incorporation of phosphate from phosphate rock. A typical phosphate rock contains phosphate (equivalent to 25-40 % P₂O₅) and calcium (equivalent to 46-54 % CaO). The contained phosphorus is not available for plants due to the poor water solubility of the mineral. In order to make the phosphorus accessible for the plants a digestion step is necessary.

A typical process therefore is the nitrophosphate process (ODDA process, US 1976283), in which, phosphate rock is digested with nitric acid. Phosphoric acid and calcium nitrate are the products of this digestion step.

The ODDA process is based on the following equation:

Ca₃(PO₄)₂ + 6 HNO₃ → 3 Ca(NO₃)₂ + 2H₃PO₄

In the ODDA plant rock phosphate from different sources is digested and made available as H₃PO₄ that is subsequently converted to HPO₄²⁻ and H₂PO₄⁻ in the production of phosphorus containing fertilizers.

However, phosphorus recovery from other sources has received increasing attention as the phosphate rock resources deplete and the need for finding a replacing source of phosphorus becomes even more important. At the moment there is no Phosphate recovery technology well established on the market which is competitive to the use of Phosphate rock.

Thus, efforts are being taken by industrial research to be able to effectively find a replacement source of phosphate. Alternative phosphorus sources can range from sewage, to animal manure, separate organic waste fractions, animal by-products, detergents and other industrial waste. Sludge incineration has the benefits of volume reduction with hazardous compound destruction and has become an increasingly adopted sludge treatment process.

Sewage sludge ash is an essential phosphate resource. About 50.000 t phosphorus per year enter the sewage water alone in Germany and are precipitated as metal salts by precipitation aids such as iron or aluminum salts together with the sewage sludge. The phosphate containing sewage sludge is burnt and the ash is disposed or used otherwise for example in road construction.

Phosphorus in sewage sludge is non-volatile, causing incineration sludge ash to be rich in P (2 - 11%), which indicates a potential P resource. The content of phosphorus, specified as P₂O₅ in SSA can vary between 6 and 25%.

Another potential phosphate source is meat-and-bone meal ash obtained by incinerating meat-and-bone meal. MBM is used as ingredients in pet food but the vast majority is used as a fossil-fuel replacement for renewable energy generation, as a fuel in cement kilns, landfilling or for incineration as an environmentally sustainable replacement for coal.

The disadvantage of SSA and other phosphate containing ashes such as MBMA is that the contained phosphorus is not available for fertilizing plants and therefore a digestion step would be required.

Several approaches for making the phosphate available are described. For example, EP 3 061 741 A1 describes a method wherein phosphor containing ash is digested with phosphoric acid.

According to WO2015/189333 A1 a citrate soluble phosphates is obtained by calcination of secondary phosphate sources with a sodium sulfuric compound. WO2015/91946 A1 refers to a method for treating ash from waste incineration comprising the digestion of the ash by a phosphate containing leaching liquor. WO2011/137880 A1 describes a method for producing phosphate fertilizers and compound fertilizers by decomposing ashes using ortho-phosphoric or and/or sulfuric acid in the digestion reaction.

In any case, the described methods for obtaining soluble phosphate fractions from sewage sludge are not satisfactory.

It is thus desirable to provide an alternative process that produces soluble phosphate in a high yield, wherein the obtained phosphate fraction can be used, preferably without any further treatment, for NPK complex fertilizer production.

It is furthermore desirable to provide an alternative base material; i.e. alternative phosphate sources for fertilizers, since the resources of phosphate rock are limited.

These objects are solved by a process for obtaining a soluble phosphate fraction from phosphate containing ashes, such as sewage sludge ash or meat-and-bone meal ash as described in the claims.

Accordingly, a process for obtaining a soluble phosphate fraction from phosphate containing ashes, in particular sewage sludge ash (SSA) or meat-and-bone meal ash (MBMA), as phosphate containing material is provided, the process comprising the steps of:
a) providing phosphate containing ashes, such as sewage sludge ash or meat-and-bone meal ash;
b) digesting the phosphate containing ashes by adding nitric acid, wherein a digestion liquor comprising a soluble phosphate fraction and a soluble calcium fraction is obtained;
c) precipitating the soluble calcium fraction from the digestion liquor by crystallizing calcium nitrate from the digestion liquor and providing a suspension containing calcium nitrate crystals and the soluble phosphate fraction; and
d) removing the calcium nitrate crystals from the suspension and obtaining a supernatant with the soluble phosphate fraction.

The process according to the invention uses nitric acid for digestion of the phosphate containing ashes, such as sewage sludge ash or meat-and-bone meal ash. The phosphate containing ashes may also be descried as secondary phosphate sources. The digestion provides a mixture of nitric acid and phosphoric acid (NP-acid) which is subsequently used for the production of nitrogen-phosphor-fertilizer (NPK fertilizer). Furthermore, the separated Calcium Nitrate crystals (separated from NP-acid) can be used for the production of calcium ammonium nitrate fertilizer (CAN fertilizer).

Thus, the present process has multiple advantages: direct use of Sewage sludge ash or meat-and-bone meal ash as alternative phosphate raw material in the ODDA process (digestion with nitric acid) to produce NPK and CAN; direct use of a waste stream currently landfilled for producing Fertilizer (Circular economy); changing phosphate amount of SSA or MBMA from unavailability to availability for green plants by using integrated digestion process utilising most of the SSA or MBMA composition for producing fertilizer NPK containing the Phosphorous and CAN containing the Calcium amount; two different fertilizers can be made out of this raw material (NPK, CAN); application of NPK Fertilizer made from conventional rock phosphate and recycled phosphate in SSA or MBMA for fertilizing green plants; Cadmium content in the fertilizer can be reduced.

The concentration of the nitric acid used in the digestion step may be in a range between 10 and 70%, preferably between 40 and 65, more preferably between 55 und 60%.

In an embodiment of the present process nitric acid is used as the only acid, i.e. no mixture of nitric acid with any further inorganic acid or organic acid is used. It is also to be understood that the digesting process with nitric acid is a one-step-process.

In a preferred embodiment of the present process the phosphate containing ashes are provided in a mixture with phosphate containing rock. For example, sewage sludge ash and/ or meat-and-bone meal ash is provided in a mixture with phosphate containing rock.

In a variant the mixture to be digested comprises phosphate containing rock in an amount between 0.5 wt% and 99.5 wt%, preferably between 10 and 99 wt%, more preferably between 20 and 99 wt%, even more preferably between 50 and 99 wt%, most preferably between 70 and 98 wt%.
in yet a further variant the mixture to be digested comprises sewage sludge ash in an amount between 0.5 and 99.5 wt%, preferably between 1 and 50wt%, more preferably between 2 and 30 wt% to provide 100%, wherein in each case the sewage sludge ash is additionally provided with an excess of at least 40%, preferably 40 to 80% in respect to the phosphate containing rock. The SSA excess is required due to its lower phosphate content compared to the phosphate containing rock with a typical P₂O₅ content of 32%. A SSA excess of 40-80% covers a 6-20% P₂O₅ content in the SSA.

The excess of sewage sludge ash in the preferred examples is 1.5, 3, 4.5, 6, 7.5, 9, 18 %, respectively. An excess of sewage sludge ash is required to reach a phosphate content in the sludge that is comparable to the phosphate content in the phosphate rock.

Most preferred examples are mixtures with one of the following ratios based on the P₂O₅ content of the rock and ash; i.e. the ratios refer to the P₂O₅ content and not the absolute amount of rock and ash:
- 97.5 wt% P₂O₅ from phosphate containing rock and 2.5 wt% P₂O₅ from sewage sludge ash;
- 95 wt% P₂O₅ from phosphate containing rock and 5 wt% P₂O₅ from sewage sludge ash;
- 92.5 wt% P₂O₅ from phosphate containing rock and 7.5 wt% P₂O₅ from sewage sludge ash;
- 90 wt% P₂O₅ from phosphate containing rock and 10 wt% P₂O₅ from sewage sludge ash;
- 87.5 wt% P₂O₅ from phosphate containing rock and 12.5 wt% P₂O₅ from sewage sludge ash;
- 85 wt% P₂O₅ from phosphate containing rock and 15 wt% P₂O₅ from sewage sludge ash;
- 70 wt% P₂O₅ from phosphate containing rock and 30 wt% P₂O₅ from sewage sludge ash;

The two parts of the mixture are provided as solid material. The phosphate rock is provided as fine, crushed rock; the sewage sludge ash is provided as powder. The typical particle size of the SSA powder may be smaller than 1 mm, preferably smaller 500 µm, more preferably smaller 200 µm (d50 may be below 100 µm).

The two materials are stored separately and then combined directly in the digestion reactor or upfront.

It is also possible and of an advantage to use a mixture of sewage sludge ash, meat-and-bone meal ash and phosphate rock.

It is furthermore of an advantage, that the sewage sludge ash originates from mono-incineration of municipal sewage sludge. Mono incineration of sewage sludge is necessary in order to avoid further impurities from other waste streams and to avoid dilution of the phosphorous content when other waste streams with no or low phosphorus content are incinerated together with the sewage sludge. It is also possible that sewage sludge and meta- and-bone meal are incinerated together and are provided as an ash mixture.

The sewage sludge ash used in the present process may have a P₂O₅ content between 6-30 wt%, preferably 15-25 wt%, more preferably 18-23 wt%.

The composition of the sewage sludge ash varies in certain ranges and depends on the source main ingredients. A preferred example of sewage sludge ash that is used has the following composition:
- P₂O₅ 6-30 wt%, preferably 15-25 wt%, more preferably 18-23wt%;
- CaO 10-30 wt%, preferably 15-25 wt%.

The sewage sludge ash may comprise further:
- SiO₂ 10-30 wt%, preferably 18-27wt%, more preferably 20-23 wt%;
- Fe₂O₃ 0.5-25 wt%, preferably 2-23 wt%, more preferably 5-20 wt%;
- Al₂O₃ 0.1-25 wt%, preferably 1-12 wt%, more preferably 2-10 wt%.

SSA may also contain small quantities of zinc oxide and copper oxide.

As mentioned above, it is also possible to use meat-and-bone meal ash (MBMA) as phosphate source. The meat-and-bone meal ash has a P₂O₅ content between 15-50 wt%, preferably 20-40 wt%, more preferably 25-37 wt%.

In an embodiment meat-and bone meal ash with the following composition is used:
- P₂O₅ 15-50 wt%, preferably 20-40 wt%, more preferably 25-37 wt%;
- CaO 20-50 wt%, preferably 30-40 wt%;
- Fe₂O₃ 0.1-2 wt%, preferably 0.5- 1.5 wt%, more preferably 0.5-1.2 wt%;
- Al₂O₃ 0.5-5 wt%, preferably 1.0- 3 wt%, more preferably 1.2 - 2.1 wt%;
- MgO 0.1-2 wt%, preferably 0.5- 1.5 wt%, more preferably 0.5-1.2 wt%; and
- K₂O 0.5 - 5 wt%, preferably 1.0 - 4 wt%, more preferably 1.2-3.2 wt%;
- free of any SiO₂.

The meat-and-bone meal ash may also be used in a mixture with phosphate containing rock. In a variant the mixture to be digested comprises meat-and-bone meal ash in an amount between 0.5 and 99.5 wt%, preferably between 1 and 50 wt%, more preferably between 2 and 30 wt% to provide 100%, wherein in each case the meat-and-bone meal ash may be additionally provided with an excess in respect to the phosphate containing rock. The excess of MBMA depends on the MBBA composition. For example in case of MBMA with 15% P₂O₅ an excess of MBMA of 55% may be used. In case of MBMA with a 37% P₂O₅ no excess of MBMA is required,

Most preferred examples are mixtures with one of the following ratios based on the P₂O₅ content of the rock and ash; i.e. the ratios refer to the P₂O₅ content and not the absolute amount of rock and ash:
- 97.5 wt% P₂O₅ from phosphate containing rock and 2.5 wt% P₂O₅ from meat-and-bone meal ash;
- 95 wt% P₂O₅ from phosphate containing rock and 5 wt% P₂O₅ from meat-and-bone meal ash;
- 92.5 wt% P₂O₅ from phosphate containing rock and 7.5 wt% P₂O₅ from meat-and-bone meal ash;
- 90 wt% P₂O₅ from phosphate containing rock and 10 wt% P₂O₅ from meat-and-bone meal ash;
- 87.5 wt% P₂O₅ from phosphate containing rock and 12.5 wt% P₂O₅ from meat-and-bone meal ash;
- 85 wt% P₂O₅ from phosphate containing rock and 15 wt% P₂O₅ from meat-and-bone meal ash;
- 70 wt% P₂O₅ from phosphate containing rock and 30 wt% P₂O₅ from meat-and-bone meal ash.

In another embodiment of the present process the nitric acid is added in the digestion step b) in a ratio of phosphate containing material (g), i.e sewage sludge ash or meat-and-bone meal ash or a mixture of sewage sludge ash and meat-and-bone meal ash and phosphate containing rock / nitric acid (ml) between 1 and 3, preferably between 1 and 2, more preferably between 1 and 1.8. For example, the ratio may be 1: 1.68 (1.68 ml nitric acid for 1 g solid mixture).

In the digestion process phosphate containing rock and sewage sludge ash are converted to calcium nitrate and phosphoric acid according to the following reactions:

| | |
|---|---|
| Calcium phosphate: | Ca₃(PO₄)₂ + 6 HN03 => 3 Ca(NO₃)₂ + 2 H₃PO₄ |
| Whitlockite (in SSA): | Ca2,86 Mg_{0,14}(PO₄)₂ + 6 HN03 => 2,86 Ca(NO₃)₂ + 0,14 Mg(NO₃)₂ + 2 H₃PO₄ |

The additional components in SSA are digested according to the following reactions:

| | |
|---|---|
| Iron oxides: | Fe203 + 6 HN03 => 2 Fe(N03)3 + 3 H₂O |
| | 3 Fe₃O₄ + 28 HNO₃ => 9 Fe(NO₃)₃ + NO + 14 H₂O (NOx formation) |
| Aluminium oxide: | Al₂O₃ + 6 HNO₃ => 2 Al(NO₃)₃ + 3 H₂O |
| Zinc oxide: | ZnO + 2HNO₃ => Zn(NO₃)₂ + H₂O |
| Copper oxide: | CuO + 2HNO₃ => Cu(NO₃)₂ + H₂O |

It is furthermore preferred, if the digestion step b) is carried out at a temperature between 50 and 90 °C, preferably between 60 and 80 °C, more preferably between 60 and 70 °C. For example, the digestion step may be carried out at a temperature range of 65-69 °C.

The digestion time in step b) may be in a range between 60 and 120 min, preferably between 70 and 100 min, more preferably between 70 and 80 min. For example, the digestion may be carried out at a temperature between 65-69°C for 70-80 min.

It is also preferred, if the digestion mixture is stirred at a speed (in particular in case of a lab size vessel) between 100 and 200 rpm, preferably between 130 and 170 rpm, more preferably at 150 rpm. It is to be understood that the stirring speed depends on the vessel size and may be adjusted accordingly.

In a further embodiment of the present process any solid material is separated from the digestion liquor after digestion step b) without cooling. This can be done for example by a filtering step. The sand filtering step is preferably carried out at the temperature of the digestion step, i.e. without cooling in order to avoid premature precipitation of calcium nitrate crystals. The filter pore size is preferably in a range between 100 and 200 µm, preferably 150 µm.

The filtrate is removed and comprises dissolved calcium nitrate and a mixture of phosphoric acid and nitric acid. In addition, the filtrate comprises fine particles (i.e. fine particles from sewage sludge ash) which promote crystallization of calcium nitrate. In particular silicate particles of the ash serve as crystallization seeds in order to improve the crystallization of calcium nitrate which leads also to an improvement of the filtration of calcium nitrate crystals from the digestion liquor. Thus, no additional seeds are added for crystallizing calcium nitrate from the digestion liquor.

In a further embodiment of the present process the calcium nitrate is crystallized from the digestion liquor by decreasing the temperature of the digestion liquor.

In a more specific embodiment of the present process the calcium nitrate is crystallized from the digestion liquor by applying a temperature ramp with a rate between 0.05 - 0.6 K/min, preferably 0.1 - 0.3 K/min, more preferably between 0.15 - 0.25 K/min.

The cooling process starts for example at 55°C down to -5 °C, preferably down to -20 °C with a cooling rate between 0.2 - 0.3 K/min, preferably 0.25 K/min. Crystallization of calcium nitrate crystals begins at temperatures between 23-25 °C. Due to the heat of crystallization that is released the cooling rate is slightly lowered.

In yet a further variant of the present process the crystallization solution is kept at the final temperature for a time period between 60 and 500 min, preferably between 120 and 180 min.

The calcium nitrate crystals (Ca(NO₃)₂^{∗}4H₂O) are removed from the suspension by filtration and the supernatant obtained comprises a mixture of phosphoric acid as soluble phosphate fraction and nitric acid. The ratio of P₂O₅ to N in said mixture is about 4.2 : 1 (about 23.2 % P₂O₅ and 5.5 % N).

The soluble phosphate fraction obtained in the present process is finally used for fertilizer production.

In an embodiment the soluble phosphate fraction comprising phosphoric acid as main component (and nitric acid) is neutralized preferably with ammonia in an ammonisation apparatus, then the suspension obtained is mixed optionally with potassium chloride and prilled or granulated to provide a micronutrient containing complex fertilizer.

It is also possible to convert the soluble phosphate fraction comprising phosphoric acid with sulfuric acid and to neutralize the mixture with ammonia. The suspension may then be mixed with ammonium nitrate for providing a sulfur containing complex fertilizer.

The (micronutrient containing) complex fertilizer obtained in a process using sewage sludge ash as phosphate source, preferably in a mixture with phosphate rock, comprises
- ammonium phosphate (mono-, di-, triammonium phosphate), ammonium nitrate,
- optionally potassium nitrate, ammonium chloride; and further
- iron, zinc and copper from SSA (as nitrates).

The complex fertilizer comprises the following mass fractions:
- total nitrogen from 12 to 20 %
   with ammonium nitrogen from 7 to 12 %
   with nitrate nitrogen from 5 to 8 %;
- total phosphate (in terms of P₂O₅) from 5 to 20;
- total potassium content (in terms of K₂O) from 8 to 20 %;
- total iron from 0.5 to 0.6 %;
- total zinc from 0.01 to 0.02 %; and
- total copper from 0.01 to 0.015 %

A micronutrient complex fertilizer without Potassium (in terms of K₂O) would have a higher phosphate content (in terms of P₂O₅) with a mass fraction up to 20% and a nitrogen content with a mass fraction of 20%.

The fertilizer obtained in a process using meat-and-bone meal ash as phosphate source, preferably in a mixture with phosphate rock, comprises
- ammonium phosphate (mono-, di-, triammonium phosphate), ammonium nitrate,
- optionally potassium nitrate, ammonium chloride; nd further
- iron and aluminum from MBMA (as nitrates).

Such fertilizer comprises the following mass fractions:
- total nitrogen from 12 to 20 %
   with ammonium nitrogen from 7 to 12 %,
   with nitrate nitrogen from 5 to 8 %,
- total phosphate (in terms of P₂O₅) from 5 to 20%,
- total potassium content (in terms of K₂O) from 8 to 20 %, and
- total iron from 0.5 to 0.6 %.

When using an ash mixture of sewage sludge ash and meat-and bone meal ash as secondary phosphate source a complex fertilizer is obtained which resembles the above described fertilizers with only trace amounts of zinc and copper (from SSA).

Due to the use of sewage sludge ash or meat-and-bone meal ash the present fertilizer is free of any organic compound which are typically contained in the sewage sludge or meat-and-bone meal. Any organic compound is decomposed or destroyed in the combustion process or burning of the sewage sludge or meat-and-bone meal.

It also needs to be pointed out that in particular when using sewage sludge ash as calcium and phosphate source in the present process it is also possible to omit any crystallization aid for precipitating and crystallizing calcium nitrate from the digestion liquor in step c) of the present process.

Typically, depending on the source of the rock phosphate, it is often necessary to use crystallization aids in order to form calcium nitrate crystals and to control the particle size of the crystals. Such crystallization aids are e.g. acid insoluble materials such as silicate based minerals. These materials have the severe disadvantages that they are not containing nutrients, thereby diluting the fertilizer, which has a detrimental effect on the application and the economics of the product. Adding large amounts of the crystallization aids may even cause the product to be out of its specified range of nutrient content.

By omitting such crystallization aids or seeds in the digestion process, a positive contribution to the nutrient balance in the final -fertilizer is achieved.

The invention is explained in more detail by means of the following examples with reference to the figures. It shows:
- Figure 1: overview of the nitrophosphate process (ODDA process), and
- Figure 2: a diagram illustrating the degree of P and Ca mobilization;

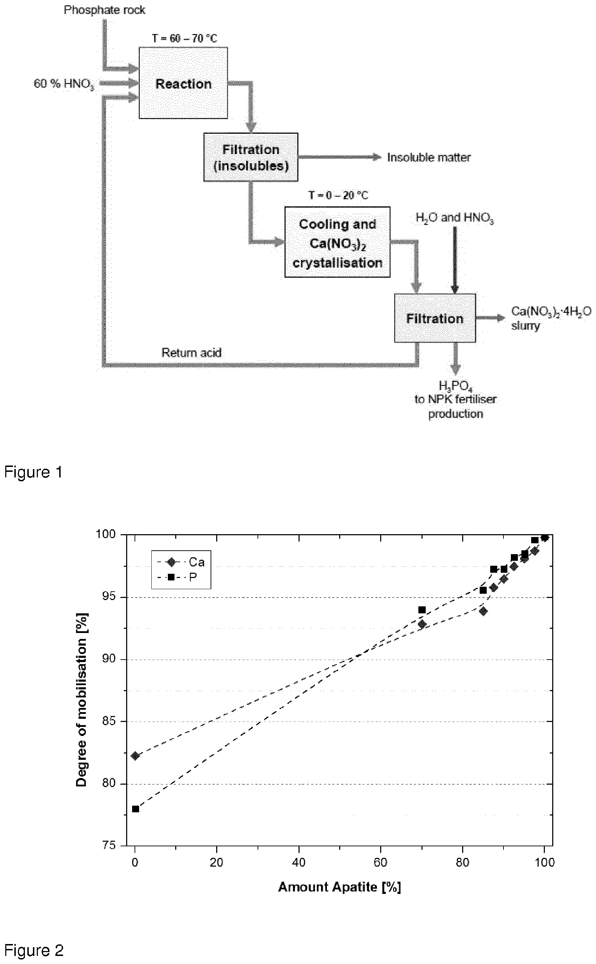

The scheme of Fig 1 illustrates the steps involved in the ODDA process. Phosphate containing rock is digested with 60% HNO₃. The digestion liquor filtered for removing insoluble matter (such as sand) and subsequently cooled down. While cooling down calcium nitrate is crystallized, and the Ca(NO₃)₂^{∗}4H₂O crystals are removed by filtration from the crystal suspension. The Ca(NO₃)₂ crystals are used as raw material for Calcium Ammonium Nitrate (CAN) fertilizer. The filtrate containing the phosphate (as phosphoric acid) is subsequently neutralized with ammonia for NPK fertilizer production.

### a) Digestion Procedure

For digestion reactions a glass reactor is used. P-rock (with different amounts of sewage sludge ash) is mixed with nitric acid (60 %) in a ratio of:
g P-Rock (incl. SSA) : ml HNO₃ (60%) = 1 : 1,68
(1, 68 ml HNO₃ are needed for 1 g P-Rock)

The reaction temperature: 65-69 °C
Reaction time: 72 min (at reaction temperature).
Stirring rate: 150 rpm

After digestion reaction the solid material (mainly SiO₂) is filtered off (without cooling, to avoid precipitation of calcium nitrate crystals, precipitation of calcium nitrate begins at ∼23 °C).

### b) Crystallization procedure

For calcium nitrate crystallisation experiments the acidic digestion liquor of phosphate rock sewage sludge ash and nitric acid was filtered (pore size: 150µm) at a temperature >55°C by vacuum filtration at 20 mbar under atmospheric pressure. The temperature of the liquor was adjusted at 55°C for 15 min and afterwards the programmed cooling was started down to -5°C at a constant stirring speed of 28 rpm.

The crystallisation process is started at 50 °C with a stirring rate 28 rpm. The temperature ramp applied is 0,25 K/min => 23 °C, then 0,15 K/min => -5 °C followed by maintaining the final temperature of -5 °C for 3 hours. After a crystallization time of approx 8 h the Ca(NO₃)₂-crystals were filtered off and washed with 300 mL HNO₃ (60%). Afterwards the crystals were separated and dissolved in distilled water and analysed by ICP-OES.

After crystallization the crystals are separated by filtration (150 µ) and the NP-acid and calcium nitrate crystals were analyzed.

### c) Reaction mixtures

Different reaction mixtures are used for the digestion reactors (see Table 1). The calculation of the mixtures is based on the substitution of the phosphorus (P₂O₅) of P-rock by phosphorus of Sewage sludge ash. The phosphorus content of P-rock (32 % P₂O₅) is higher compared to the P-content of SSA (∼20 % P₂O₅). Therefore in total more SSA is needed to reach the same P-amount.

**Table 1**

| **Nr.** | **P-Rock** | **Sewage sludge ash** | **Substituted P₂O₅** | **HNO₃** |
|---|---|---|---|---|
| | **[g]** | **[g]** | **[%]** | **[ml]** |
| 1 | 100 | 0 | 0 | 168 |
| 2 | 97,5 | 4 | 2,5 | 168 |
| 3 | 95 | 8 | 5 | 168 |
| 4 | 92,5 | 12 | 7,5 | 168 |
| 5 | 90 | 16 | 10 | 168 |
| 6 | 87,5 | 20 | 12,5 | 168 |
| 7 | 85 | 24 | 15 | 168 |
| 8 | 70 | 48 | 30 | 168 |
| 12 | 0 | 160 | 100 | 168 |

### d) Results

The degree of mobilisation of P and Ca is decreasing with increasing amount of SSA. For an amount of apatite of at least 90% the mobilisation rate of P is >97.3 % and for Ca >96.5%, respectively (see Table 1 and diagram of Fig. 2)

**Table 2: Degree of mobilisation [%]**

| **P-Rock [%]** | **Ca** | **P** |
|---|---|---|
| **100** | 99.8 | 99.9 |
| **97.5** | 98.7 | 99.6 |
| **95** | 98.1 | 98.5 |
| **92.5** | 97.5 | 98.2 |
| **90** | 96.5 | 97.3 |
| **87.5** | 95.8 | 97.3 |
| **85** | 93.9 | 95.6 |
| **70** | 92.9 | 94.0 |
| **0** | 82.3 | 78.0 |

With increasing amount of SSA the amount of residue as might be expected increased as shown in Table 3 below. Approximately 60 wt.-% of solid residue were left after leaching of pure SSA (0% of apatite (P-Rock)).

**Table 3**

| | **Residue [g]** | **Residue [%]** |
|---|---|---|
| **100** | 1.89 | 1.9 |
| **97.5** | 6.69 | 6.6 |
| **95** | 7.60 | 7.3 |
| **92.5** | 9.09 | 8.6 |
| **90** | 12.46 | 11.6 |
| **87.5** | 13.28 | 12.2 |
| **85** | 20.92 | 18.9 |
| **70** | 27.64 | 22.8 |
| **0** | 98.45 | 57.8 |

The examples will show that the insoluble P compounds in rock phosphate and SSA undergo a structural change during the digestion resulting in a soluble P fraction which is the basis of the conventional NPK made from Phosphate rock. Therefore at least the same performance for green field test with such a "new" fertilizer" is expected.

## Claims

1. A process for obtaining a soluble phosphate fraction from phosphate containing ash, in particular sewage sludge ash (SSA) and / or meat-and-bone meal ash as phosphate containing material comprising the steps of:
a) providing phosphate containing ash;
b) digesting the phosphate containing ash by adding nitric acid, wherein a digestion liquor comprising a soluble phosphate fraction and a soluble calcium fraction is obtained;
c) precipitating the soluble calcium fraction from the digestion liquor by crystallizing calcium nitrate from the digestion liquor and providing a suspension containing calcium nitrate crystals and the soluble phosphate fraction; and
d) removing the calcium nitrate crystals from the suspension and obtaining a supernatant with the soluble phosphate fraction.

2. Process according to claim 1, **characterized in that** the sewage sludge ash and/ or meat-and bone meal ash is provided in a mixture with phosphate containing rock.

3. Process according to claim 2, **characterized in that** the mixture to be digested comprises phosphate containing rock in an amount between 0.5 wt% and 99.5 wt%, preferably between 50 and 99 wt%, more preferably between 70 and 98 wt%.

4. Process according to any one of claims 2 or 3, **characterized in that** the mixture to be digested comprises sewage sludge ash or meat-and-bone meal ash in an amount between 0.5 and 99.5 wt%, preferably between 1 and 50 wt%, more preferably between 2 and 30 wt% to provide 100%, wherein in each case the sewage sludge ash or meat-and-bone meal ash may additionally provided with an excess of at least 40% in respect to the phosphate containing rock.

5. Process according to any one of the preceding claims, **characterized in that** the sewage sludge ash originates from mono-incineration of municipal sewage sludge.

6. Process according to any one of the preceding claims, **characterized in that** the sewage sludge ash has a P₂O₅ content between 6-30 wt%, preferably 15-25 wt%, more preferably 18-23 wt% and the meat-and-bone meal ash has a P₂O₅ content between 15-50 wt%, preferably 20-40 wt%, more preferably 25-37 wt%.

7. Process according to any one of the preceding claims, **characterized in that** in the digestion step b) nitric acid is added in a ratio of phosphate containing material (g), i.e sewage sludge ash / meat-and-bone meal ash or sewage sludge ash / meat-and-bone meal ash and phosphate containing rock / nitric acid (ml) between 1 and 3, preferably between 1 and 2, more preferably between 1 and 1.8.

8. Process according to any one of the preceding claims, **characterized in that** the digestion step b) is carried out at a temperature between 50 and 90 °C, preferably between 60 and 80 °C, more preferably between 60 and 70 °C.

9. Process according to any one of the preceding claims, **characterized in that** the digestion time in step b) is in a range between 60 and 120 min, preferably between 70 and 100 min, more preferably between 70 and 80 min.

10. Process according to any one of the preceding claims, **characterized in that** after digestion step b) any solid material is separated from the digestion liquor without cooling.

11. Process according to any one of the preceding claims, **characterized in that** the calcium nitrate is crystallized from the digestion liquor by decreasing the temperature of the digestion liquor.

12. Process according to any one of the preceding claims, **characterized in that** the crystallization solution is kept at the final temperature for a time period between 60 and 500 min, preferably between 120 and 180 min.

13. Process according to any one of the preceding claims, **characterized in that** the calcium nitrate crystals are removed from the suspension by filtration and the supernatant obtained comprises a mixture of phosphoric acid as soluble phosphate fraction and nitric acid.

14. Use of the soluble phosphate fraction obtained in the process according to any one of the preceding claims for NPK complex fertilizer production.

15. A complex fertilizer obtainable from a soluble phosphate fraction obtained in a process using sewage sludge ash as phosphate source according to one of the claims 1-13 comprising
- ammonium phosphate (mono-, di-, triammonium phosphate), ammonium nitrate, potassium nitrate, ammonium chloride and further
- iron, zink and copper from SSA
comprising the following mass fractions:
- total nitrogen from 12 to 20 %,
with ammonium nitrogen from 7 to 12 %,
with nitrate nitrogen from 0.5 to 8 %,
- total phosphate (in terms of P₂O₅) from 5 to 20%,
- total potassium content (in terms of K₂O) from 8 to 20 %,
- total iron from 0.5 to 0.6 %,
- total zinc from 0.01 to 0.02%, and
- total copper from 0.01 to 0.015 %.

## Patentansprüche

1. Ein Verfahren zur Gewinnung einer löslichen Phosphatfraktion aus phosphathaltiger Asche, insbesondere Klärschlammasche (SSA) und/oder Tiermehlasche als phosphathaltiges Material, umfassend die folgenden Schritte
a) Bereitstellung von phosphathaltiger Asche;
b) Aufschließen der phosphathaltigen Asche durch Zugabe von Salpetersäure, wobei eine Aufschlußflüssigkeit erhalten wird, die eine lösliche Phosphatfraktion und eine lösliche Calciumfraktion umfaßt;
c) Ausfällen der löslichen Calciumfraktion aus der Aufschlusslösung durch Kristallisieren von Calciumnitrat aus der Aufschlusslösung und Bereitstellen einer Suspension, die Calciumnitratkristalle und die lösliche Phosphatfraktion enthält; und
d) Entfernen der Calciumnitratkristalle aus der Suspension und Erhalt eines Überstandes mit der löslichen Phosphatfraktion.

2. Verfahren nach Anspruch 1, **dadurch gekennzeichnet, dass** die Klärschlammasche und/oder Fleisch- und Knochenmehlasche in einer Mischung mit phosphathaltigem Gestein bereitgestellt wird.

3. Verfahren nach Anspruch 2, **dadurch gekennzeichnet, dass** die aufzuschließende Mischung phosphathaltiges Gestein in einer Menge zwischen 0,5 Gew.-% und 99,5 Gew.-%, vorzugsweise zwischen 50 und 99 Gew.-%, besonders bevorzugt zwischen 70 und 98 Gew.-%, umfasst.

4. Verfahren nach einem der Ansprüche 2 oder 3, **dadurch gekennzeichnet, dass** die aufzuschließende Mischung Klärschlammasche oder Tiermehlasche in einer Menge zwischen 0,5 und 99,5 Gew.-%, vorzugsweise zwischen 1 und 50 Gew.-%, besonders bevorzugt zwischen 2 und 30 Gew.-%, umfasst, um 100 % bereitzustellen, wobei in jedem Fall die Klärschlammasche oder Tiermehlasche zusätzlich mit einem Überschuss von mindestens 40 % in Bezug auf das phosphathaltige Gestein versehen werden kann.

5. Verfahren nach einem der vorhergehenden Ansprüche, **dadurch gekennzeichnet, dass** die Klärschlammasche aus der Monoverbrennung von kommunalem Klärschlamm stammt.

6. Verfahren nach einem der vorhergehenden Ansprüche, **dadurch gekennzeichnet, dass** die Klärschlammasche einen P₂O₅-Gehalt zwischen 6-30 Gew.-%, vorzugsweise 15-25 Gew.-%, besonders bevorzugt 18-23 Gew.-%, und die Tiermehlasche einen P₂O₅-Gehalt zwischen 15-50 Gew.-%, vorzugsweise 20-40 Gew.-%, besonders bevorzugt 25-37 Gew.-%, aufweist.

7. Verfahren nach einem der vorhergehenden Ansprüche, **dadurch gekennzeichnet, dass** in dem Aufschlussschritt b) Salpetersäure in einem Verhältnis von phosphathaltigem Material (g), d.h. Klärschlammasche / Tiermehlasche oder Klärschlammasche / Tiermehlasche und phosphathaltigem Gestein / Salpetersäure (ml) zwischen 1 und 3, vorzugsweise zwischen 1 und 2, noch bevorzugter zwischen 1 und 1,8 zugegeben wird.

8. Verfahren nach einem der vorhergehenden Ansprüche, **dadurch gekennzeichnet, dass** der Aufschlussschritt b) bei einer Temperatur zwischen 50 und 90°C, vorzugsweise zwischen 60 und 80°C, noch bevorzugter zwischen 60 und 70°C, durchgeführt wird.

9. Verfahren nach einem der vorhergehenden Ansprüche, **dadurch gekennzeichnet, dass** die Aufschlusszeit in Schritt b) in einem Bereich zwischen 60 und 120 min, vorzugsweise zwischen 70 und 100 min, noch bevorzugter zwischen 70 und 80 min liegt.

10. Verfahren nach einem der vorhergehenden Ansprüche, **dadurch gekennzeichnet, dass** nach dem Aufschlussschritt b) jegliches Feststoffmaterial von der Aufschlusslösung ohne Kühlung abgetrennt wird.

11. Verfahren nach einem der vorhergehenden Ansprüche, **dadurch gekennzeichnet, dass** das Calciumnitrat aus der Aufschlusslösung durch Absenken der Temperatur der Aufschlusslösung kristallisiert wird.

12. Verfahren nach einem der vorhergehenden Ansprüche, **dadurch gekennzeichnet, dass** die Kristallisationslösung während einer Zeitdauer zwischen 60 und 500 min, vorzugsweise zwischen 120 und 180 min, auf der Endtemperatur gehalten wird.

13. Verfahren nach einem der vorhergehenden Ansprüche, **dadurch gekennzeichnet, dass** die Calciumnitratkristalle durch Filtration aus der Suspension entfernt werden und der erhaltene Überstand ein Gemisch aus Phosphorsäure als lösliche Phosphatfraktion und Salpetersäure umfasst.

14. Verwendung der löslichen Phosphatfraktion, die in dem Verfahren gemäß einem der vorstehenden Ansprüche erhalten wurde, zur Herstellung von NPK-Komplexdüngern.

15. Komplexdüngemittel, erhältlich aus einer löslichen Phosphatfraktion, die in einem Verfahren unter Verwendung von Klärschlammasche als Phosphatquelle nach einem der Ansprüche 1-13 erhalten wird, umfassend
- Ammoniumphosphat (Mono-, Di-, Triammoniumphosphat), Ammoniumnitrat, Kaliumnitrat, Ammoniumchlorid und weitere
- Eisen, Zink und Kupfer von SSA
bestehend aus den folgenden Massenanteilen:
- Gesamtstickstoff von 12 bis 20 %,
mit Ammoniumstickstoff von 7 bis 12 %,
mit Nitratstickstoff von 0,5 bis 8 %,
- Gesamtphosphat (bezogen auf P₂O₅) von 5 bis 20%,
- Gesamtgehalt an Kalium (in Form von K₂O) von 8 bis 20 %,
- Gesamteisen von 0,5 bis 0,6 %,
- Gesamtzink von 0,01 bis 0,02%, und
- Gesamtkupfer von 0,01 bis 0,015 %.

## Revendications

1. Procédé pour obtenir une fraction de phosphate soluble à partir de cendres contenant du phosphate, en particulier des cendres de boues d'épuration (SSA) et/ou des cendres de farine de viande et d'os en tant que matériau contenant du phosphate, comprenant les étapes suivantes :
a) fournir des cendres contenant du phosphate ;
b) digérer les cendres contenant du phosphate en ajoutant de l'acide nitrique, où une liqueur de digestion comprenant une fraction de phosphate soluble et une fraction de calcium soluble est obtenue ;
c) précipiter la fraction de calcium soluble à partir de la liqueur de digestion en cristallisant le nitrate de calcium à partir de la liqueur de digestion et en fournissant une suspension contenant des cristaux de nitrate de calcium et la fraction de phosphate soluble ; et
d) éliminer les cristaux de nitrate de calcium de la suspension et obtenir un surnageant avec la fraction de phosphate soluble.

2. Procédé selon la revendication 1, **caractérisé en ce que** les cendres de boues d'épuration et/ou les cendres de farine de viande et d'os sont fournies en mélange avec une roche contenant du phosphate.

3. Procédé selon la revendication 2, **caractérisé en ce que** le mélange à digérer comprend une roche contenant du phosphate en une quantité comprise entre 0,5% en poids et 99,5% en poids, de préférence entre 50 et 99% en poids, plus préférablement entre 70 et 98% en poids.

4. Procédé selon l'une quelconque des revendications 2 et 3, **caractérisé en ce que** le mélange à digérer comprend des cendres de boues d'épuration ou des cendres de farine de viande et d'os en une quantité comprise entre 0,5 et 99,5% en poids, de préférence entre 1 et 50% en poids, plus préférablement entre 2 et 30% en poids pour fournir 100%, où dans chaque cas, les cendres de boues d'épuration ou les cendres de farine de viande et d'os peuvent en outre être fournies avec un excès d'au moins 40% par rapport à la roche contenant du phosphate.

5. Procédé selon l'une quelconque des revendications précédentes, **caractérisé en ce que** les cendres de boues d'épuration proviennent de la mono-incinération de boues d'épuration municipales.

6. Procédé selon l'une quelconque des revendications précédentes, **caractérisé en ce que** les cendres de boues d'épuration ont une teneur en P₂O₅ comprise entre 6 et 30% en poids, de préférence 15 et 25% en poids, plus préférablement 18 et 23% en poids et les cendres de farine de viande et d'os ont une teneur en P₂O₅ comprise entre 15 et 50% en poids, de préférence 20 et 40% en poids, plus préférablement 25 et 37% en poids.

7. Procédé selon l'une quelconque des revendications précédentes, **caractérisé en ce que** lors de l'étape de digestion b) de l'acide nitrique est ajouté dans un rapport matériau contenant du phosphate (g), c'est-à-dire cendres de boues d'épuration/cendres de farine de viande et d'os ou cendres de boues d'épuration / cendres de farine de viande et d'os et roche contenant du phosphate/acide nitrique (ml) compris entre 1 et 3, de préférence entre 1 et 2, plus préférablement entre 1 et 1,8.

8. Procédé selon l'une quelconque des revendications précédentes, **caractérisé en ce que** l'étape de digestion b) est réalisée à une température comprise entre 50 et 90 °C, de préférence entre 60 et 80 °C, plus préférablement entre 60 et 70 °C.

9. Procédé selon l'une quelconque des revendications précédentes, **caractérisé en ce que** le temps de digestion à l'étape b) se trouve dans une plage comprise entre 60 et 120 min, de préférence entre 70 et 100 min, plus préférablement entre 70 et 80 min.

10. Procédé selon l'une quelconque des revendications précédentes, **caractérisé en ce qu'**après l'étape de digestion b) tout matériau solide est séparé de la liqueur de digestion sans refroidissement.

11. Procédé selon l'une quelconque des revendications précédentes, **caractérisé en ce que** le nitrate de calcium est cristallisé à partir de la liqueur de digestion en diminuant la température de la liqueur de digestion.

12. Procédé selon l'une quelconque des revendications précédentes, **caractérisé en ce que** la solution de cristallisation est maintenue à la température finale pendant une durée comprise entre 60 et 500 min, de préférence entre 120 et 180 min.

13. Procédé selon l'une quelconque des revendications précédentes, **caractérisé en ce que** les cristaux de nitrate de calcium sont éliminés de la suspension par filtration et le surnageant obtenu comprend un mélange d'acide phosphorique en tant que fraction de phosphate soluble et d'acide nitrique.

14. Utilisation de la fraction de phosphate soluble obtenue dans le procédé selon l'une quelconque des revendications précédentes pour la production d'engrais complexe NPK.

15. Engrais complexe pouvant être obtenu à partir d'une fraction de phosphate soluble obtenue dans un procédé utilisant des cendres de boues d'épuration en tant que source de phosphate selon l'une des revendications 1 à 13 comprenant
- du phosphate d'ammonium (phosphate de mono-, di-, triammonium), du nitrate d'ammonium, du nitrate de potassium, du chlorure d'ammonium et en outre
- du fer, du zinc et du cuivre provenant de SSA
comprenant les fractions massiques suivantes :
- azote total de 12 à 20%,
avec de l'azote d'ammonium de 7 à 12%,
avec de l'azote de nitrate de 0,5 à 8%,
- phosphate total (en termes de P₂O₅) de 5 à 20%,
- teneur totale en potassium (en termes de K₂O) de 8 à 20%,
- fer total de 0,5 à 0,6%,
- zinc total de 0,01 à 0,02%, et
- cuivre total de 0,01 à 0,015%.
